# EUROPEAN PATENT SPECIFICATION

(11) **EP 2 764 719 B1**
(45) Date of publication and mention of the grant of the patent: **07.12.2016**
(21) Application number: 12762566.3
(22) Date of filing: 13.09.2012
(51) Int. Cl.: H04W 24/10

(54) **RADIO MEASUREMENTS IN CELL_FACH**
FUNKMESSUNGEN BEI CELL _ FACH
MESURES RADIO DANS CELL_FACH

(30) Priority: 03.10.2011 WO PCT/EP2011/067216
(43) Date of publication of application: 13.08.2014
(73) Proprietor: Nokia Solutions and Networks Oy, 02610 Espoo (FI)
(72) Inventor: DECARREAU, Guillaume, Beijing 100022 (CN); HWANG, Woonhee, FI-02180 Espoo (FI); RANTA-AHO, Karri Markus, FI-02600 Espoo (FI)
(74) Representative: Nokia Corporation
(86) International application number: PCT/EP2012/067894
(87) International publication number: WO 2013/050226

(56) References cited:
- US-A1- 2009 168 728
- QUALCOMM: "Absolute Priority Cell reselection in cell_FACH", 3GPP DRAFT; R2-114160_ABSOLUTE PRIORITY CELL RESELECTION IN CELL_FACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050539981, [retrieved on 2011-08-16]
- RENESAS MOBILE EUROPE LTD ET AL: "Addition of measurements and reselection from UTRAN CELL_FACH to E-UTRAN", 3GPP DRAFT; 25331_CR_(REL-10)_R2-114351 CELL_FACH-LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050539774, [retrieved on 2011-08-16]

## Description

### Field of the invention

The present invention relates to two apparatuses, a method, a system, and a computer program product related to improving the forward access channel mode. More particularly, the present invention relates to two apparatuses, a method, a system, and a computer program product for radio measurements in the forward access channel mode.

### Background of the invention

Abbreviations
- 3GPP: Third Generation Partnership Project
- DCH: Dedicated Channel
- DL: Downlink
- DRX: Discontinuous Reception
- DSCH: Downlink Shared Channel
- DTX: Discontinuous Transmission
- FACH: Forward Access Channel
- ID: Identification
- IE: Information Element
- LTE: Long Term Evolution
- MP: mandatory part
- OP: optional part
- PCH: Paging Channel
- RACH: Random Access Channel
- RAT: Radio Access Technology
- RB: Radio Bearer
- Rel: Release
- RNC: Radio Network Controller
- RRC: Radio Resource Control
- TDD: Time Division Duplex
- TS: Technical Specification
- UE: User Equipment
- UL: Uplink
- UMTS: Universal Mobile Telecommunications System
- USCH: Uplink Shared Channel
- UTRA: UMTS Terrestrial Radio Access
- UTRAN: UMTS Terrestrial Radio Access Network

In the current 3GPP specifications of Rel-10, the mobility in CELL_FACH is based on Cell reselection, which is controlled by the UE. Furthermore, there is no mobility to LTE.

The CELL_FACH state (hereinafter also named FACH state or forward access channel state) is a protocol state of the UTRA RRC connected mode and may be characterized as follows (see http://www.umtsworld.com/technology/RCC_states.htm):
- No dedicated physical channel is allocated to the UE.
- The UE continuously monitors a FACH in the downlink.
- The UE is assigned a default common or shared transport channel in the uplink (e.g. RACH) that it can use anytime according to the access procedure for that transport channel.
- The position of the UE is known by UTRAN on cell level according to the cell where the UE last made a cell update.
- In TDD mode, one or several USCH or DSCH transport channels may have been established.

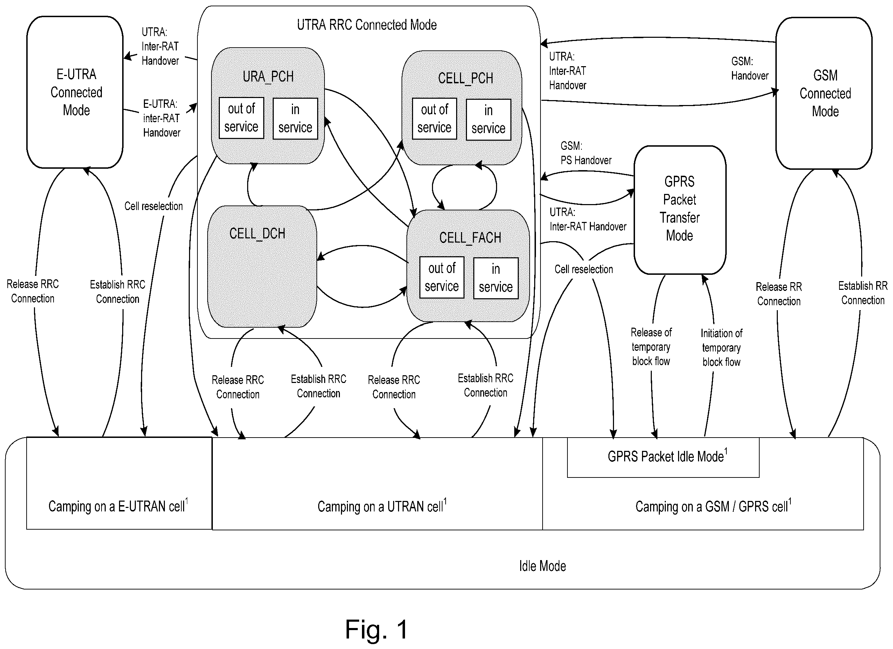

Further details of the FACH state are defined in 3GPP TS25.331. Fig. 1, taken from v10.4.0 of this TS (section 7.1), shows the currently (Rel-10) defined protocol states of the UTRA RRC connected mode and the transitions between the protocol states and to other modes.

In the Work Item Further Enhanced Cell_FACH (RP-111321) for Rel-11, mobility to LTE, as well as UTRAN inter-frequency are discussed. One of the approaches is to have Network Controlled mobility, i.e. the network may give the mobility order to the UE.

In the current specifications (Rel-10), the inter RAT radio related measurements are stopped when entering CELL_FACH (TS 25.331 v10.4.0, section 8.4.1.6.3). In order to introduce Network Controlled Mobility, one way forward is to allow some Radio Related measurements to take place in CELL_FACH.

The mobility in CELL_FACH has been discussed in the context of Autonomous Cell Reselection (see R2-114350).

In LTE Systems, in connected mode, the mobility is always network controlled, even if DRX and DTX are running to limit the UL and DL transmissions (see TS 25.331 v10.2.0, section 5.3.1.3).

The non-patent document QUALCOMM: "Absolute Priority Cell Reselection in CELL_FACH", 3GPP TSG-RAN WG2 Meeting #75, R2-114160, 16 August 2011, discloses solutions to provide the capability in CELL_FACH to measure and reselect E-UTRA.

### Summary of the invention

It is an object of the present invention to improve the prior art.

In particular, it is an object to allow for network controlled mobility without strongly increasing the power consumption of the UE.

According to a first aspect of the invention, there is provided an apparatus, comprising flag detecting means adapted to detect a received flag; state detecting means adapted to detect if the apparatus communicates in a forward access channel state; measuring means adapted to perform, if the apparatus communicates in the forward access channel state, a measurement only if the flag is detected, wherein the measurement is radio related.

The apparatus may further comprise transmitting means adapted to transmit a result of the measurement in the forward access channel state.

The apparatus may further comprise parameter detecting means adapted to detect a parameter in a received reconfiguration message; inhibiting means adapted to inhibit the measuring means from performing the measurement if the apparatus communicates in the forward access channel state and the parameter is not detected.

The apparatus may further comprise selecting means adapted to select a frequency of a radio access technology based on a received priority information, wherein the measuring means may be further adapted to perform the measurement related to the selected frequency.

According to a second aspect of the invention, there is provided an apparatus, comprising flag detecting processor adapted to detect a received flag; state detecting processor adapted to detect if the apparatus communicates in a forward access channel state; measuring processor adapted to perform, if the apparatus communicates in the forward access channel state, a measurement only if the flag is detected, wherein the measurement is radio related.

The apparatus may further comprise transmitting processor adapted to transmit a result of the measurement in the forward access channel state.

The apparatus may further comprise parameter detecting processor adapted to detect a parameter in a received reconfiguration message; inhibiting processor adapted to inhibit the measuring processor from performing the measurement if the apparatus communicates in the forward access channel state and the parameter is not detected.

The apparatus may further comprise selecting processor adapted to select a frequency of a radio access technology based on a received priority information, wherein the measuring processor may be further adapted to perform the measurement related to the selected frequency.

According to a third aspect of the invention, there is provided a user equipment comprising an apparatus according to any of the first and second aspects.

According to a fourth aspect of the invention, there is provided an apparatus, comprising flag providing means adapted to provide, to a user equipment in a measurement control message, a flag associated to a radio related measurement, wherein the measurement control message comprises an identification of the radio related measurement; message providing means adapted to provide a reconfiguration message to the user equipment, wherein the reconfiguration message orders the user equipment to go into a forward access channel state.

The apparatus may further comprise priority providing means adapted to provide a priority information related to a frequency for which the measurement is to be performed.

According to a fifth aspect of the invention, there is provided an apparatus, comprising flag providing processor adapted to provide, to a user equipment in a measurement control message, a flag associated to a radio related measurement, wherein the measurement control message comprises an identification of the radio related measurement; message providing processor adapted to provide a reconfiguration message to the user equipment, wherein the reconfiguration message orders the user equipment to go into a forward access channel state.

The apparatus may further comprise priority providing processor adapted to provide a priority information related to a frequency for which the measurement is to be performed.

According to a sixth aspect of the invention, there is provided a base station, comprising an apparatus according to any of the fourth and fifth aspects.

According to a seventh aspect of the invention, there is provided a system, comprising a user equipment apparatus according to any of the first and second aspects; a base station apparatus according to any of the fourth and fifth aspects; wherein the forward access channel state of the user equipment apparatus corresponds to the forward access channel state of the base station apparatus; the flag received by the user equipment apparatus comprises the flag provided by the base station apparatus; the reconfiguration message received by the user equipment apparatus comprises the reconfiguration message provided by the base station apparatus, wherein the parameter detected by the user equipment apparatus comprises the identification of the radio related measurement provided by the base station apparatus.

According to an eighth aspect of the invention, there is provided a method, comprising detecting a received flag; detecting if an apparatus performing the method communicates in a forward access channel state; performing, if the apparatus communicates in the forward access channel state, a measurement only if the flag is detected, wherein the measurement is radio related.

The method may be a method of forward access channel state control.

The method may further comprise transmitting a result of the measurement in the forward access channel state.

The method may further comprise detecting a parameter in a received reconfiguration message; inhibiting performing the measurement if the apparatus communicates in the forward access channel state and the parameter is not detected.

The method may further comprise selecting a frequency of a radio access technology based on a received priority information, wherein the measurement may be performed related to the selected frequency.

According to a ninth aspect of the invention, there is provided a method, comprising providing, to a user equipment in a measurement control message, a flag associated to a radio related measurement, wherein the measurement control message comprises an identification of the radio related measurement; providing a reconfiguration message to the user equipment, wherein the reconfiguration message orders the user equipment to go into a forward access channel state.

The method may be a method of forward access channel state control.

The method may further comprise providing a priority information related to a frequency for which the measurement is to be performed.

According to a tenth aspect of the invention, there is provided a computer program product including a program comprising software code portions being arranged, when run on a processor of an apparatus, to perform the method according to any one of eighth and ninth aspects.

The computer program product may comprise a computer-readable medium on which the software code portions are stored, and/or the program may be directly loadable into a memory of the processor.

According to embodiments of the invention, at least the following advantages are achieved:
Network controlled mobility from the FACH state may be achieved without strongly increasing the power consumption. The additional signaling load on the uplink may be limited to the transmission of measurement results required for a reliable mobility decision by the network. Downlink signaling may be increased only very little or not increased at all.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein
Fig. 1 shows the RRC states defined in Rel-10;
Fig. 2 shows an apparatus according to an embodiment of the invention;
Fig. 3 shows a method according to an embodiment of the invention;
Fig. 4 shows an apparatus according to an embodiment of the invention; and
Fig. 5 shows a method according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

The radio related measurements may be configured by the network for CELL_DCH. However, if they should be used in CELL_FACH, the parameters may be different. Furthermore, only some of the measurements configurable for CELL_DCH may be needed in case UE is measuring in CELL_FACH for the CELL_FACH mobility.

According to embodiments of the invention, in the MEASUREMENT CONTROL Message of the DCH state, a flag may indicate if the associated measurement is to be used by the UE in CELL_FACH.

For example, if the flag is off, the associated measurement may only take place in CELL_DCH but not in CELL_FACH. If the flag is on, the associated measurement may be performed in CELL_FACH.

In some embodiments, a corresponding flag may indicate that the associated measurement is to be used by the UE in CELL_FACH only. In these cases, if the flag is off (or, if the flag is not included in the MESAUREMENT CONTROL message) the associated measurement may not take place in CELL_DCH nor in CELL_FACH, but if the flag is on (or, if the flag is included in the MEASUREMENT CONTROL message) the associated measurement must not be performed in CELL_DCH but may be performed in CELL_FACH.

Some embodiments may comprise both of these flags. Thus, the following ways to perform a measurement may be defined:
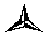 The measurement will be performed in CELL_DCH only;
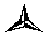 The measurement will be performed in CELL_FACH only; and
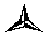 The measurement will be performed in CELL_DCH and CELL_FACH.

More in detail, in some embodiments, the MEASUREMENT CONTROL message of the DCH state may comprise an additional optional information element, e.g. named LTE Measurement in CELL_FACH. The presence of this IE may indicate that the measurement of this measurement ID may take place in CELL_FACH, or alternatively would not be performed in CELL_DCH but may be performed in CELL_FACH only. An example is given in Table 1:

**Table 1**

| **Information Element/Group name** | **Need** | **Multi** | **Type and reference** | **Semantics description** |
|---|---|---|---|---|
| LTE Measurement in CELL_FACH | OP | | Enumer ated (TRUE) | The presence of this IE indicates that this Measurement ID can take place in CELL_FACH |

In some embodiments, the UE will additionally check if the network explicitly (by a dedicated message to the UE) instructs the UE by a set of parameters to perform the associated measurement. Only if the flag is on and the UE is explicitly instructed, the measurement may be performed in CELL_FACH, otherwise not.

More in detail, in some embodiments, in the message that orders the UE to enter CELL_FACH state, the network may list the Measurement ID of the measurements that will take place in CELL_FACH state.

The UE may be ordered to go to CELL_FACH based on a RADIO BEARER RECONFIGURATION message. In some embodiments, this message may comprise one or more IEs indicating which measurements shall be performed (active) in CELL_FACH state. An example of such additional IEs is given in Table 2:

**Table 2**

| **Information Element/Group name** | **Need** | **Multi** | **Type and reference** | **Semantics description** |
|---|---|---|---|---|
| Active Measurement ID in FACH | OP | 1.. Max Meas ID | | The listed measurement s shall be active in CELL_FACH. If not listed the measurement should not take place in CELL_FACH |
| >Measurement ID | MP | | Measure ment Identity 10.3.7.48 | |

In some embodiments, a priority for a certain RAT (e.g. UTRAN or LTE) and/or for frequency in the RAT is set. If the UE is not in the RAT with the highest priority, it looks for a radio access of higher priority to re-select the cell. The priority list may be t may be broadcasted in a System Information Block.. If it is UE specific, it may be signaled in the UTRAN MOBILITY INFORMATION, which is dedicated to the UE. In case a priority for a RAT is set, the information about the measurements to be performed by the UE in CELL_FACH may be provided together with the priority, i.e. in the respective system information block or in the UTRAN MOBILITY INFORMATION.

In some of these embodiments, if LTE measurements are configured, the UE may measure one or more frequencies of the highest priority.

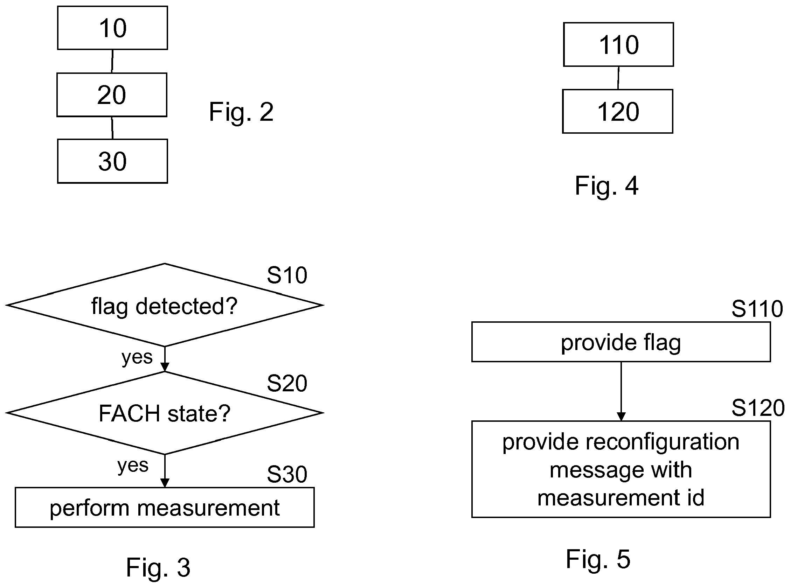

Fig. 2 shows an apparatus according to an embodiment of the invention. The apparatus may be a UE. Fig. 3 shows a method according to an embodiment of the invention. The apparatus according to Fig. 2 may perform the method of Fig. 3 but is not limited to this method. The method of Fig. 3 may be performed by the apparatus of Fig. 2 but is not limited to being performed by this apparatus.

The apparatus comprises flag detecting means 10, state detecting means 20, and measuring means 30.

The flag detecting means 10 may detect a flag (S10). The flag may be received in the CELL_FACH state or in another state such as the DCH state.

The state detecting means 20 may detect if the apparatus such as a UE is in the CELL_FACH state (S20). The sequence of steps S10 and S20 may be interchanged.

If both conditions of steps S10 and S20 are fulfilled, i.e. the flag is detected and the apparatus is in the CELL_FACH state, the measuring means 30 may perform a radio related measurement (S30).

Fig. 4 shows an apparatus according to an embodiment of the invention. The apparatus may be a base station. Fig. 5 shows a method according to an embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises set flag providing means 110 and message providing means 120.

The flag providing means 110 may provide a flag to a user equipment, wherein the flag is associated to a radio related measurement (S110). A radio related measurement may be related to another RAT (inter-RAT measurement) or to the RAT the apparatus is attached too (intra-RAT measurement).

The message providing means 120 may provide to the user equipment a reconfiguration message such as RADIO BEARER RECONFIGURATION (S120). The reconfiguration message may comprise a parameter which is an identification of the radio related measurement.

Embodiments of the invention are described based on a release 10 system but embodiments of the invention may be applied to other releases and other radio access technologies comprising a FACH state.

A UE may be a user equipment, a terminal, a mobile phone, a laptop, a smartphone, a tablet PC, or any other device that may attach to the mobile network. A base station may be a NodeB, an eNodeB or any other base station of a radio network comprising a FACH state.

If not otherwise stated or otherwise made clear from the context, the statement that two entities are different means that they are differently addressed in their respective network. It does not necessarily mean that they are based on different hardware. That is, each of the entities described in the present description may be based on a different hardware, or some or all of the entities may be based on the same hardware.

According to the above description, it should thus be apparent that exemplary embodiments of the present invention provide, for example a user equipment apparatus such as a user equipment, or a component thereof, an apparatus embodying the same, a method for controlling and/or operating the same, and computer program(s) controlling and/or operating the same as well as mediums carrying such computer program(s) and forming computer program product(s). Furthermore, it should thus be apparent that exemplary embodiments of the present invention provide, for example a base station apparatus such as a base station like a NodeB or eNodeB, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
flag detecting means (10) adapted to detect a flag received in a measurement control message (S10);
state detecting means (20) adapted to detect if the apparatus communicates in a forward access channel state (S20);
measuring means (30) adapted to perform, if the apparatus communicates in the forward access channel state, a measurement only if the flag is detected, wherein the measurement is radio related (S30).

2. The apparatus according to claim 1, further comprising
transmitting means adapted to transmit a result of the measurement in the forward access channel state.

3. The apparatus according to any of claims 1 and 2, further comprising
parameter detecting means adapted to detect a parameter in a received reconfiguration message ;
inhibiting means adapted to inhibit the measuring means from performing the measurement if the apparatus communicates in the forward access channel state and the parameter is not detected.

4. The apparatus according to any of claims 1 to 3, further comprising
selecting means adapted to select a frequency of a radio access technology based on a received priority information, wherein
the measuring means is further adapted to perform the measurement related to the selected frequency.

5. Apparatus, comprising
flag providing means (110) adapted to provide, to a user equipment in a measurement control message, a flag associated to a radio related measurement, wherein the measurement control message comprises an identification of the radio related measurement (S110);
message providing means (120) adapted to provide a reconfiguration message to the user equipment, wherein the reconfiguration message orders the user equipment to go into a forward access channel state (S120).

6. The apparatus according to claim 5, further comprising
priority providing means adapted to provide a priority information related to a frequency for which the measurement is to be performed.

7. System, comprising
a user equipment apparatus according to any of claims 3 to 4 dependent on claim 3;
a base station apparatus according to any of claims 5 and 6; wherein
the forward access channel state of the user equipment apparatus corresponds to the forward access channel state of the base station apparatus;
the flag received by the user equipment apparatus in a measurement control message comprises the flag provided by the base station apparatus;
the reconfiguration message received by the user equipment apparatus comprises the reconfiguration message provided by the base station apparatus, wherein the parameter detected by the user equipment apparatus comprises the identification of the radio related measurement provided by the base station apparatus.

8. Method, comprising
detecting a flag in a received measurement control message (S10);
detecting if an apparatus performing the method communicates in a forward access channel state (S20);
performing, if the apparatus communicates in the forward access channel state, a measurement only if the flag is detected, wherein the measurement is radio related (S30).

9. The method according to claim 8, further comprising
transmitting a result of the measurement in the forward access channel state.

10. The method according to any of claims 8 and 9, further comprising
detecting a parameter in a received reconfiguration message;
inhibiting performing the measurement if the apparatus communicates in the forward access channel state and the parameter is not detected.

11. The method according to any of claims 8 to 10, further comprising
selecting a frequency of a radio access technology based on a received priority information, wherein
the measurement is performed related to the selected frequency.

12. A computer program product including a program comprising software code portions being arranged, when run on a processor of an apparatus, to perform the method according to any one of claims 8 to 11.

13. The computer program product according to claim 12, wherein the computer program product comprises a computer-readable medium on which the software code portions are stored, and/or wherein the program is directly loadable into a memory of the processor.

## Patentansprüche

1. Vorrichtung, die Folgendes umfasst:
Flagdetektionsmittel (10), das angepasst ist, um ein in einer Messsteuerungsnachricht empfangenes Flag zu detektieren (S10);
Zustanddetektionsmittel (20), das angepasst ist, um zu detektieren, ob die Vorrichtung in einem Forward-Access-Channel-Zustand kommuniziert (S20);
Messungsmittel (30), das angepasst ist, um, falls die Vorrichtung im Forward-Access-Channel-Zustand kommuniziert, eine Messung nur dann durchzuführen, falls das Flag detektiert wird, wobei die Messung funkbezogen ist (S30).

2. Vorrichtung nach Anspruch 1, die ferner Folgendes umfasst:
Übertragungsmittel, das angepasst ist, um ein Ergebnis der Messung im Forward-Access-Channel-Zustand zu übertragen.

3. Vorrichtung nach einem der Ansprüche 1 und 2, die ferner Folgendes umfasst:
Parameterdetektionsmittel, das angepasst ist, um einen Parameter in einer empfangenen Rekonfigurationsnachricht zu detektieren;
Hinderungsmittel, das angepasst ist, um das Messungsmittel am Durchführen der Messung zu hindern, falls die Vorrichtung im Forward-Access-Channel-Zustand kommuniziert und der Parameter nicht detektiert wird.

4. Vorrichtung nach einem der Ansprüche 1 bis 3, die ferner Folgendes umfasst:
Auswahlmittel, das angepasst ist, um eine Frequenz einer Funkzugangstechnologie basierend auf einer empfangenen Prioritätsinformation auszuwählen, wobei
das Messungsmittel ferner angepasst ist, um die Messung in Bezug auf die ausgewählte Frequenz durchzuführen.

5. Vorrichtung, die Folgendes umfasst:
Flagbereitstellungsmittel (110), das angepasst ist, um für ein Benutzerendgerät in einer Messsteuerungsnachricht ein mit einer funkbezogenen Messung assoziiertes Flag bereitzustellen, wobei die Messsteuerungsnachricht eine Identifizierung der funkbezogenen Messung umfasst (S110);
Nachrichtenbereitstellungsmittel (120), das angepasst ist, um eine Rekonfigurationsnachricht für das Benutzerendgerät bereitzustellen, wobei die Rekonfigurationsnachricht das Benutzerendgerät zum Eintreten in einen Forward-Access-Channel-Zustand anweist (S120).

6. Vorrichtung nach Anspruch 5, die ferner Folgendes umfasst:
Prioritätsbereitstellungsmittel, das angepasst ist, um eine Prioritätsinformation in Bezug auf eine Frequenz, für welche die Messung durchgeführt werden soll, bereitzustellen.

7. System, das Folgendes umfasst:
eine Benutzerendgerätvorrichtung nach einem der Ansprüche 3 bis 4 in Abhängigkeit von Anspruch 3;
eine Basisstationsvorrichtung nach einem der Ansprüche 5 und 6; wobei
der Forward-Access-Channel-Zustand der Benutzerendgerätvorrichtung dem Forward-Access-Channel-Zustand der Basisstationsvorrichtung entspricht;
das durch die Benutzerendgerätvorrichtung in einer Messsteuerungsnachricht empfangene Flag das durch die Basisstationsvorrichtung bereitgestellte Flag umfasst;
die durch die Benutzerendgerätvorrichtung empfangene Rekonfigurationsnachricht die durch die Basisstationsvorrichtung bereitgestellte Rekonfigurationsnachricht umfasst, wobei der durch die Benutzerendgerätvorrichtung detektierte Parameter die Identifizierung der funkbezogenen Messung, die durch die Basisstationsvorrichtung bereitgestellt wird, umfasst.

8. Verfahren, das Folgendes umfasst:
Detektieren eines Flags in einer empfangenen Messsteuerungsnachricht (S10);
Detektieren, ob eine das Verfahren durchführende Vorrichtung in einem Forward-Access-Channel-Zustand kommuniziert (S20);
falls die Vorrichtung im Forward-Access-Channel-Zustand kommuniziert, Durchführen einer Messung nur dann, falls das Flag detektiert wird, wobei die Messung funkbezogen ist (S30).

9. Verfahren nach Anspruch 8, das ferner Folgendes umfasst:
Übertragen eines Ergebnisses der Messung im Forward-Access-Channel-Zustand.

10. Verfahren nach einem der Ansprüche 8 und 9, das ferner Folgendes umfasst:
Detektieren eines Parameters in einer empfangenen Rekonfigurationsnachricht;
Hindern am Durchführen der Messung, falls die Vorrichtung im Forward-Access-Channel-Zustand kommuniziert und der Parameter nicht detektiert wird.

11. Verfahren nach einem der Ansprüche 8 bis 10, das ferner Folgendes umfasst:
Auswählen einer Frequenz einer Funkzugangstechnologie basierend auf einer empfangenen Prioritätsinformation, wobei
die Messung in Bezug auf die ausgewählte Frequenz durchgeführt wird.

12. Computerprogrammprodukt, das ein Programm enthält, das Softwarecodeabschnitte umfasst, die so angeordnet sind, dass sie, wenn sie auf einem Prozessor einer Vorrichtung ausgeführt werden, das Verfahren nach einem der Ansprüche 8 bis 11 durchführen.

13. Computerprogrammprodukt nach Anspruch 12, wobei das Computerprogrammprodukt ein computerlesbares Medium umfasst, auf dem die Softwarecodeabschnitte abgelegt sind, und/oder wobei das Programm direkt in einen Speicher des Prozessors geladen werden kann.

## Revendications

1. Appareil, comprenant :
un moyen de détection d'indicateur (10) conçu pour détecter un indicateur reçu dans un message de contrôle de mesure (S10) ;
un moyen de détection d'état (20) conçu pour détecter si l'appareil communique dans un état de canal d'accès direct (S20) ;
un moyen de mesure (30) conçu pour effectuer, si l'appareil communique dans l'état de canal d'accès direct, une mesure uniquement si l'indicateur est détecté, la mesure étant de type radio (S30).

2. Appareil selon la revendication 1, comprenant en outre :
un moyen de transmission conçu pour transmettre un résultat de la mesure dans l'état de canal d'accès direct.

3. Appareil selon l'une quelconque des revendications 1 et 2, comprenant en outre :
un moyen de détection de paramètre conçu pour détecter un paramètre dans un message de reconfiguration reçu ;
un moyen d'empêchement conçu pour empêcher le moyen de mesure de réaliser la mesure si l'appareil communique dans l'état de canal d'accès direct et si le paramètre n'est pas détecté.

4. Appareil selon l'une quelconque des revendications 1 à 3, comprenant en outre :
un moyen de sélection conçu pour sélectionner une fréquence d'une technologie d'accès radio sur la base d'une information de priorité reçue,
le moyen de mesure étant en outre conçu pour réaliser la mesure en relation avec la fréquence sélectionnée.

5. Appareil, comprenant :
un moyen de fourniture d'indicateur (110) conçu pour fournir, à un équipement d'utilisateur dans un message de contrôle de mesure, un indicateur associé à une mesure de type radio, le message de contrôle de mesure comprenant une identification de la mesure de type radio (S110) ;
un moyen de fourniture de message (120) conçu pour fournir un message de reconfiguration à l'équipement d'utilisateur, le message de reconfiguration ordonnant à l'équipement d'utilisateur de passer dans l'état de canal d'accès direct (S120).

6. Appareil selon la revendication 5, comprenant en outre :
un moyen de fourniture de priorité conçu pour fournir une information de priorité relative à une fréquence pour laquelle la mesure doit être réalisée.

7. Système, comprenant :
un appareil équipement d'utilisateur selon l'une quelconque des revendications 3 et 4 dépendant de la revendication 3 ;
un appareil station de base selon l'une quelconque des revendications 5 et 6, dans lequel :
l'état de canal d'accès direct de l'appareil équipement d'utilisateur correspondant à l'état de canal d'accès direct de l'appareil station de base ;
l'indicateur reçu par l'appareil équipement d'utilisateur dans un message de contrôle de mesure comprend l'indicateur fourni par l'appareil station de base ;
le message de reconfiguration reçu par l'appareil équipement d'utilisateur comprend le message de reconfiguration fourni par l'appareil station de base,
le paramètre détecté par l'appareil équipement d'utilisateur comprend l'identification de la mesure de type radio fournie par l'appareil station de base.

8. Procédé, consistant à :
détecter un indicateur dans un message de contrôle de mesure (S10) ;
détecter si un appareil réalisant le procédé communique dans un état de canal d'accès direct (S20) ;
effectuer, si l'appareil communique dans l'état de canal d'accès direct, une mesure uniquement si l'indicateur est détecté, la mesure étant de type radio (S30).

9. Procédé selon la revendication 8, consistant en outre à :
transmettre un résultat de la mesure dans l'état de canal d'accès direct.

10. Procédé selon l'une quelconque des revendications 8 et 9, consistant en outre à :
détecter un paramètre dans un message de reconfiguration reçu ;
empêcher la réalisation de la mesure si l'appareil communique dans l'état de canal d'accès direct et si le paramètre n'est pas détecté.

11. Procédé selon l'une quelconque des revendications 8 à 10, consistant en outre à :
sélectionner une fréquence d'une technologie d'accès radio sur la base d'une information de priorité reçue,
la mesure étant réalisée en relation avec la fréquence sélectionnée.

12. Produit de programme informatique comprenant un programme comportant des parties de code logiciel conçues, lorsqu'elles sont exécutées sur un processeur d'un appareil, à réaliser le procédé selon l'une quelconque des revendications 8 à 11.

13. Produit de programme informatique selon la revendication 12, le produit de programme informatique comprenant un support lisible par ordinateur sur lequel sont stockées les parties de code logiciel, et/ou le programme pouvant être directement chargé dans une mémoire du processeur.
